(19) Europäisches Patentamt
European Patent Office
Office européen des brevets

(11) **EP 2 685 072 B1**

(12) **EUROPEAN PATENT SPECIFICATION**

(45) Date of publication and mention
of the grant of the patent:
**20.02.2019   Bulletin 2019/08**

(51) Int Cl.:
*F02D 41/02* (2006.01)     *F01N 3/20* (2006.01)
*F02D 41/22* (2006.01)

(21) Application number: **13175607.4**

(22) Date of filing: **08.07.2013**

(54) **Control device for internal combustion engine**

Steuerungsvorrichtung für einen Verbrennungsmotor

Dispositif de contrôle pour moteur à combustion interne

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:  **12.07.2012   JP 2012156719**

(43) Date of publication of application:
**15.01.2014   Bulletin 2014/03**

(60) Divisional application:
**16202214.9 / 3 165 744**

(73) Proprietor: **TOYOTA JIDOSHA KABUSHIKI
KAISHA**
**Toyota-shi, Aichi-ken, 471-8571 (JP)**

(72) Inventor: **Ota, Hirohiko**
**Toyota-shi, Aichi-ken, 471-8571 (JP)**

(74) Representative: **Kuhnen & Wacker**
**Patent- und Rechtsanwaltsbüro PartG mbB
Prinz-Ludwig-Straße 40A
85354 Freising (DE)**

(56) References cited:
**EP-A1- 1 653 058        EP-A1- 2 375 022
DE-A1-102011 105 589     US-A1- 2009 114 199**

**Description**

BACKGROUND OF THE INVENTION

1. Field of the Invention

The invention relates to a control device for an internal combustion engine that includes a reducing agent addition system that supplies an ammonia-based reducing agent to a nitrogen oxide purification catalyst arranged downstream in an exhaust gas flow direction in an exhaust passage by adding the ammonia-based reducing agent into the exhaust passage.

2. Description of Related Art

There is a selective catalytic reduction (SCR) system as a nitrogen oxides purification device that reduces nitrogen oxides (NOx) that are emitted from an internal combustion engine. In this SCR system, an ammonia-based reducing agent, such as an aqueous solution of urea (so-called urea aqueous solution) and ammonia gas, is injected into an exhaust passage. Thus, in a downstream nitrogen oxide purification catalyst arranged downstream in the exhaust gas flow direction in the exhaust passage, NOx contained in exhaust gas is selectively reduced to nitrogen and water by the reduction action of ammonia. When urea aqueous solution has been injected into the exhaust passage, urea in the urea aqueous solution is hydrolyzed in high-temperature exhaust gas to produce ammonia, and the ammonia is utilized to reduce NOx in the catalyst.

There is such an SCR system in which a PM removal filter (diesel particulate filter (DPF)) is provided upstream of the SCR catalyst. The PM removal filter is a filter of which a filter function is regenerable by burning deposited particulate matter (PM) after the filter has trapped PM.

The filter function of the PM removal filter is regenerated by removing PM by burning the PM through heating (for example, Japanese Patent Application JP 2003-176711 A). At the time of the regeneration, high-temperature exhaust gas is supplied from the PM removal filter to the SCR catalyst. Therefore, a reducing agent addition valve (hereinafter, referred to as addition valve) that adds the ammonia-based reducing agent from the upstream side of the SCR catalyst is subjected to high-temperature exhaust gas.

When the ammonia-based reducing agent has been supplied to the addition valve, an overheat of the addition valve is prevented by cooling the addition valve with the ammonia-based reducing agent, so it is possible to prevent a failure of a coil, and the like, inside the addition valve, due to heat.

In this way, a situation that the addition valve is subjected to high-temperature exhaust gas can occur not only at the time of regeneration of the DPF but also at the time of a high load of the internal combustion engine. In this case as well, an overheat of the addition valve is prevented by cooling the addition valve with the ammonia-based reducing agent, so it is possible to prevent a failure of the coil, and the like, inside the addition valve, due to heat.

However, there is an ammonia-based reducing agent, such as urea aqueous solution, that freezes at a low temperature. In the case where urea aqueous solution has frozen, even when the internal combustion engine is started and enters an operating state where the addition valve is subjected to high-temperature exhaust gas, urea aqueous solution may not be supplied to the addition valve due to freezing of urea aqueous solution. Thus, it is difficult to cool the addition valve with the ammonia-based reducing agent.

There is a technique for detecting a frozen state of urea aqueous solution and then unfreezing the urea aqueous solution with the use of a heater (for example, Japanese Patent Application JP 2010-180801 A, Japanese Patent Application JP 2010-164014 A and Japanese Patent Application JP 2008-248709 A). However, there is no description about measures against an overheat of an addition valve due to freezing of an ammonia-based reducing agent.

From DE 10 2012 105 589 A1, another technology for exhaust treatment in internal combustion engines is known. There, a treatment control module selectively interrupts a regeneration of the particulate filter based on various parameters, for example when the tip temperature is greater than the predetermined maximum temperature.

SUMMARY OF THE INVENTION

The invention provides a control device for an internal combustion engine, which suppresses an overheat of an addition valve when it is not possible to add an ammonia-based reducing agent into an exhaust passage due to freezing, or the like.

An aspect of the invention provides a control device for an internal combustion engine according to claim 1 that includes a reducing agent addition system that supplies an ammonia-based reducing agent to a nitrogen oxide purification catalyst arranged in downstream of an exhaust passage by adding the ammonia-based reducing agent into the exhaust passage of the internal combustion engine through an addition valve, and an exhaust gas temperature suppressor that, when it is not possible to add the ammonia-based reducing agent into the exhaust passage, suppresses an exhaust gas temperature in the exhaust passage to a lower temperature than the exhaust gas temperature when it is possible to add the ammonia-based reducing agent into the exhaust passage.

When it is not possible to add the ammonia-based reducing agent into the exhaust passage of the internal combustion engine, the exhaust gas temperature suppressor suppresses the exhaust gas temperature in the exhaust passage to a lower temperature as compared to the exhaust gas temperature when it is possible to add the ammonia-based reducing agent into the exhaust passage. Thus, it is possible to suppress a rise in the temperature of exhaust gas, so an overheat of the addition valve due to exhaust gas is suppressed.

In the control device according to the aspect of the invention, when it is not possible to add the ammonia-based reducing agent into the exhaust passage, the exhaust gas temperature suppressor executes a temperature decreasing process of decreasing the exhaust gas temperature in the exhaust passage as compared to the exhaust gas temperature when it is possible to add the ammonia-based reducing agent into the exhaust passage.

The exhaust gas temperature suppressor decreases the temperature in the exhaust passage when it is not possible to add the ammonia-based reducing agent into the exhaust passage as compared to the temperature when it is possible to add the ammonia-based reducing agent into the exhaust passage, by executing the temperature decreasing process. Thus, it is possible to suppress a rise in the temperature of exhaust gas.

In the control device according to the aspect of the invention, a particulate matter removal filter that traps particulate matter and of which a filter function is regenerable by burning the deposited particulate matter is provided in the exhaust passage at a location upstream of the addition valve, and, when it is not possible to add the ammonia-based reducing agent into the exhaust passage, the exhaust gas temperature suppressor executes, as the temperature decreasing process, a temperature decreasing process of decreasing a regeneration temperature of the particulate matter removal filter as compared to the regeneration temperature when it is possible to add the ammonia-based reducing agent into the exhaust passage.

A rise in the temperature of exhaust gas occurs when the particulate matter removal filter is being regenerated. Thus, when it is not possible to add the ammonia-based reducing agent into the exhaust passage, the exhaust gas temperature suppressor executes the temperature decreasing process of decreasing the regeneration temperature. With this configuration, when it is not possible to add the ammonia-based reducing agent into the exhaust passage, the temperature in the exhaust passage is decreased through the temperature decreasing process as compared to the temperature when it is possible to add the ammonia-based reducing agent into the exhaust passage. Hence, it is possible to suppress a rise in the temperature of exhaust gas, so an overheat of the addition valve due to exhaust gas is suppressed.

In the control device according to the aspect of the invention, when it is not possible to add the ammonia-based reducing agent into the exhaust passage, the exhaust gas temperature suppressor may execute, as the temperature decreasing process, an upper limit setting process of setting an upper limit to the exhaust gas temperature.

The exhaust gas temperature suppressor suppresses a rise in the exhaust gas temperature when it is not possible to add the ammonia-based reducing agent into the exhaust passage as compared to a rise in the exhaust gas temperature when it is possible to add the ammonia-based reducing agent into the exhaust passage by executing the upper limit setting process. Thus, it is possible to suppress a rise in the temperature of exhaust gas.

In the control device according to the aspect of the invention, the exhaust gas temperature suppressor may set an upper limit to a fuel injection amount in the internal combustion engine in order to set an upper limit to the exhaust gas temperature through the upper limit setting process.

A rise in the temperature of exhaust gas also occurs due to an increase in the fuel injection amount that is burned in the internal combustion engine. Therefore, when it is not possible to add the ammonia-based reducing agent into the exhaust passage, the exhaust gas temperature suppressor executes the upper limit setting process of setting an upper limit to the fuel injection amount in the internal combustion engine. Thus, it is possible to suppress a rise in the temperature of exhaust gas, so an overheat of the addition valve due to exhaust gas is suppressed.

In the control device according to the aspect of the invention, the exhaust gas temperature suppressor may set an upper limit to an accelerator operation amount that adjusts the fuel injection amount over the internal combustion engine in order to set an upper limit to the exhaust gas temperature through the upper limit setting process.

A rise in the temperature of exhaust gas also occurs when the internal combustion engine is in a high-speed high-load state. Therefore, when it is not possible to add the ammonia-based reducing agent into the exhaust passage, the exhaust gas temperature suppressor executes the upper limit setting process of setting an upper limit to the accelerator operation amount that adjusts the fuel injection amount over the internal combustion engine. Thus, it is possible to suppress a rise in the temperature of exhaust gas, so an overheat of the addition valve due to exhaust gas is suppressed.

In the control device according to the aspect of the invention, the ammonia-based reducing agent is urea aqueous solution, and it is not possible to add the ammonia-based reducing agent into the exhaust passage when the urea aqueous solution is frozen.

In a case wherein the ammonia-based reducing agent is urea aqueous solution, it is not possible to add the ammonia-based reducing agent into the exhaust passage due to freezing of the urea aqueous solution. In such a case, the exhaust gas temperature suppressor suppresses the rise in the temperature of exhaust gas in order to suppress an overheat of the addition valve.

In the control device according to the aspect of the invention, the internal combustion engine may be mounted on a vehicle, and the exhaust gas temperature suppressor may execute the temperature decreasing process by decreasing the regeneration temperature as an outside air temperature rises.

As the outside air temperature rises, the temperature of the addition valve also rises and is more easily overheated. Therefore, the exhaust gas temperature suppressor is able to suppress an overheat of the addition valve due to exhaust gas by decreasing the regeneration temperature as the outside air temperature rises.

In the control device according to the aspect of the invention, the internal combustion engine may be mounted on a vehicle, and the exhaust gas temperature suppressor may execute the temperature decreasing process by decreasing the regeneration temperature as a vehicle speed decreases.

As the vehicle speed decreases, the amount of heat radiated from the addition valve also decreases, and the addition valve is more easily overheated. Therefore, the exhaust gas temperature suppressor is able to suppress an overheat of the addition valve due to exhaust gas by decreasing the regeneration temperature as the vehicle speed decreases.

In the control device according to the aspect of the invention, the internal combustion engine may be mounted on a vehicle, and the exhaust gas temperature suppressor may execute the upper limit setting process by decreasing the upper limit as an outside air temperature rises.

The exhaust gas temperature suppressor decreases the upper limit (the upper limit of the fuel injection amount or the upper limit of the accelerator operation amount) as the outside air temperature rises. Thus, it is possible to suppress an overheat of the addition valve due to exhaust gas.

In the control device according to the aspect of the invention, the internal combustion engine may be mounted on a vehicle, and the exhaust gas temperature suppressor may execute the upper limit setting process by decreasing the upper limit as a vehicle speed decreases.

The exhaust gas temperature suppressor decreases the upper limit (the upper limit of the fuel injection amount or the upper limit of the accelerator operation amount) as the vehicle speed decreases. Thus, it is possible to suppress an overheat of the addition valve due to exhaust gas.

BRIEF DESCRIPTION OF THE DRAWINGS

Features, advantages, and technical and industrial significance of exemplary embodiments of the invention will be described below with reference to the accompanying drawings, in which like numerals denote like elements, and wherein:

FIG. 1 is a block diagram that shows the schematic configuration of an internal combustion engine according to the aspect of the invention;
FIG. 2 is a flowchart of an exhaust gas temperature suppression process that is executed by a control device according to the aspect of the invention;
FIG. 3 is a graph that illustrates a map MAPurf that is used in the aspect of the invention;
FIG. 4 is a graph that illustrates a map MAPfuel that is used in the aspect of the invention;
FIG. 5 is a flowchart of an exhaust gas temperature suppression process that is executed by a control device according to the aspect of the invention;
FIG. 6 is a flowchart of an exhaust gas temperature suppression process that is executed by a control device according to the aspect of the invention;
FIG. 7 is a graph that illustrates a map MAPshd that is used in the aspect of the invention;
FIG. 8 is a flowchart of an exhaust gas temperature suppression process that is executed by a control device according to the aspect of the invention;
FIG 9 is a graph that illustrates a map MAPinj that is used in the aspect of the invention;
FIG. 10 is a flowchart of an exhaust gas temperature suppression process that is executed by a control device according to the aspect of the invention; and
FIG. 11 is a graph that illustrates a map MAPaccp that is used in the aspect of the invention.

DETAILED DESCRIPTION OF EMBODIMENTS

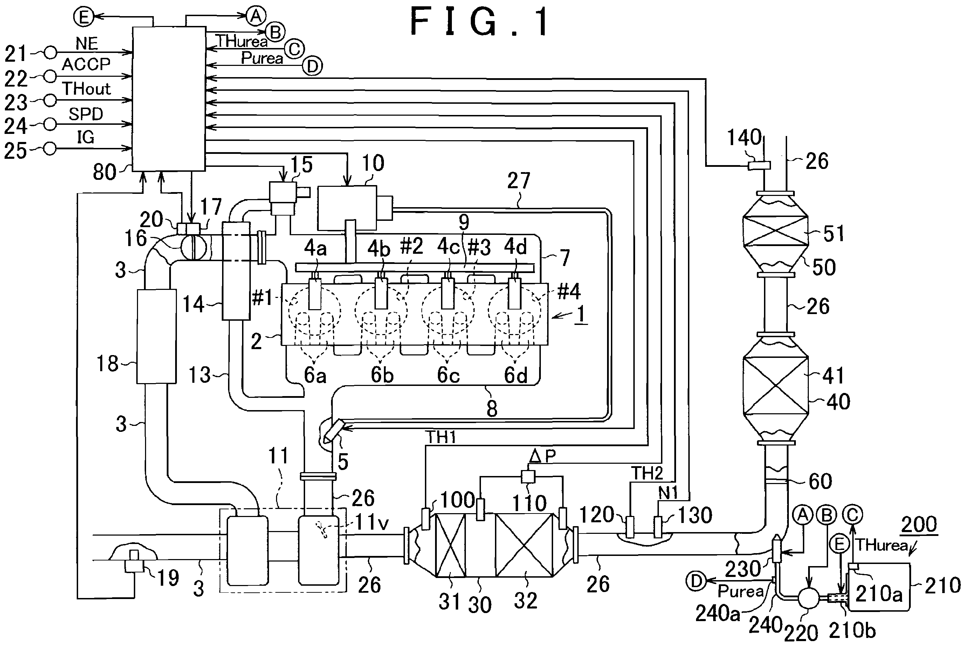

FIG. 1 is a block diagram that shows the schematic configuration of a control device for an internal combustion engine 1 according to an embodiment of the aspect of the invention. The internal combustion engine 1 is a diesel engine.

The internal combustion engine 1 includes a plurality of cylinders #1 to #4. A plurality of fuel injection valves 4a to 4d are provided at a cylinder head 2. These fuel injection valves 4a to 4d inject fuel into combustion chambers of the respective cylinders #1 to #4. The cylinder head 2 has intake ports and exhaust ports 6a to 6d in correspondence with the respective cylinders #1 to #4. The intake ports are respectively provided to introduce fresh air into the cylinders. The exhaust ports 6a to 6d are provided to emit combustion gas to the outside of the cylinders.

The fuel injection valves 4a to 4d are connected to a common rail 9 that accumulates high-pressure fuel. The common rail 9 is connected to a supply pump 10. The supply pump 10 draws fuel in a fuel tank, and supplies high-pressure fuel to the common rail 9. High-pressure fuel supplied to the common rail 9 is injected into the corresponding cylinder when each of the fuel injection valves 4a to 4d opens.

An intake manifold 7 is connected to the intake ports. The intake manifold 7 is connected to an intake passage 3. An intake air throttle valve 16 is provided in the intake passage 3. The intake air throttle valve 16 is provided to adjust an intake air flow rate.

An exhaust manifold 8 is connected to the exhaust ports 6a to 6d. The exhaust manifold 8 is connected to the exhaust passage 26. A variable geometry turbocharger 11 is provided in the exhaust passage 26. The turbocharger 11 supercharges intake air, which is introduced into the cylinders, by utilizing exhaust pressure. A nozzle vane 11v for adjusting an exhaust gas flow rate is provided in the turbocharger 11 at an inlet side of an exhaust-side turbine of the turbocharger 11. The opening degree of the nozzle vane 11v is changed on the basis of an engine operating state. For example, in a low-load range, the dynamic pressure of exhaust gas is increased by reducing the opening degree of the nozzle vane 11v even when the exhaust gas flow rate is low. In addition, in a high-load range, a pressure loss of exhaust gas is reduced by increasing the opening degree of the nozzle vane 11v at the time when the exhaust gas flow rate is high.

An intercooler 18 is provided in the intake passage 3 between an intake-side compressor of the turbocharger 11 and the intake air throttle valve 16. The intercooler 18 cools intake air of which the temperature is raised through supercharging of the turbocharger 11.

A first purification member 30 that purifies exhaust gas is provided downstream of an exhaust-side turbine of the turbocharger 11 in the exhaust passage 26. An oxidation catalyst 31 and a DPF catalyst 32 are arranged inside the first purification member 30 in series in a direction in which exhaust gas flows.

A catalyst which oxidizes hydrocarbons (HC) in exhaust gas is supported on the oxidation catalyst 31. The DPF catalyst 32 is a particulate matter removal filter that traps particulate matter (PM) in exhaust gas. The particulate matter removal filter is formed of porous ceramics and a catalyst for facilitating an oxidation of PM is supported on the particulate matter removal filter. PM in exhaust gas is trapped at the time when exhaust gas passes through the porous wall of the DPF catalyst 32.

A fuel addition valve 5 is provided near a position where the exhaust manifold 8 is connected to the exhaust passage 26. The fuel addition valve 5 is used to supply fuel as an additive to the oxidation catalyst 31 or the DPF catalyst 32. The fuel addition valve 5 is connected to the supply pump 10 via a fuel supply tube 27. The arrangement location of the fuel addition valve 5 may be located anywhere as needed as long as the fuel addition value 5 is located in an exhaust system upstream of the first purification member 30.

When the amount of PM trapped by the DPF catalyst 32 exceeds a predetermined value, the process of regenerating the DPF catalyst 32 is started. Thus, fuel is injected from the fuel addition valve 5 into the exhaust manifold 8. Fuel injected from the fuel addition valve 5 is burned as it reaches the oxidation catalyst 31. Thus, the exhaust gas temperature rises. Exhaust gas raised in temperature by the oxidation catalyst 31 flows into the DPF catalyst 32, so the temperature of the DPF catalyst 32 is raised. Thus, PM deposited in the DPF catalyst 32 is oxidized, and a filter function of the DPF catalyst 32 is regenerated (hereinafter, also referred to as PM regeneration).

A second purification member 40 that purifies exhaust gas is provided downstream of the first purification member 30 in the exhaust gas flow direction in the exhaust passage 26. A selective reduction NOx catalyst (hereinafter, referred to as SCR catalyst) 41 is arranged inside the second purification member 40. The selective reduction NOx catalyst is a nitrogen oxide (NOx) purification catalyst that reduces and purifies NOx in exhaust gas by utilizing a reducing agent.

Furthermore, a third purification member 50 that purifies exhaust gas is provided downstream of the second purification member 40 in the exhaust gas flow direction in the exhaust passage 26. An ammonia oxidation catalyst 51 which purifies ammonia in exhaust gas is arranged inside the third purification member 50.

The internal combustion engine 1 includes an urea aqueous solution supply mechanism 200 as a reducing agent addition system. The reducing agent addition system supplies an ammonia-based reducing agent to the SCR catalyst 41. The urea aqueous solution supply mechanism 200 includes a tank 210, an urea aqueous solution addition valve (or simply referred to as addition valve) 230, a supply passage 240 and a pump 220. The tank 210 stores urea aqueous solution that is an ammonia-based reducing agent. The urea aqueous solution addition valve 230 injects and supplies urea aqueous solution into the exhaust passage 26. The supply passage 240 connects the urea aqueous solution addition valve 230 to the tank 210. The pump 220 is provided in the supply passage 240.

The urea aqueous solution addition valve 230 is provided in the exhaust passage 26 between the first purification member 30 and the second purification member 40. The injection hole of the urea aqueous solution addition valve 230 is directed toward the SCR catalyst 41. When the urea aqueous solution addition valve 230 is opened, the urea aqueous solution in the tank 210 is injected into the exhaust passage 26 via the supply passage 240.

An urea aqueous solution temperature sensor 210a is arranged in the tank 210, and detects an urea aqueous solution temperature THurea. An urea aqueous solution pressure sensor 240a is arranged in the supply passage 240, and detects a pressure Purea of urea aqueous solution that is supplied from the pump 220. Furthermore, a heater 210b is arranged over the range from the tank 210 to the supply passage 240. When urea aqueous solution is frozen, the urea aqueous solution is unfrozen by energizing the heater 210b.

The pump 220 is an electric pump. When the pump 220 rotates in the forward direction, the pump 220 feeds urea aqueous solution from the tank 210 to the urea aqueous solution addition valve 230. In contrast, when the pump 220 rotates in the reverse direction, the pump 220 feeds urea aqueous solution from the urea aqueous solution addition valve 230 to the tank 210. That is, when the pump 220 rotates in the reverse direction, urea aqueous solution is recovered from the urea aqueous solution addition valve 230 and the supply passage 240, and is returned to the tank 210.

A dispersion plate 60 is provided in the exhaust passage 26 between the urea aqueous solution addition valve 230 and the SCR catalyst 41. The dispersion plate 60 disperses urea aqueous solution, injected from the urea aqueous solution addition valve 230, in exhaust gas. The urea aqueous solution injected from the urea aqueous solution addition valve 230 is hydrolyzed under high temperature to produce ammonia, and the ammonia is adsorbed by the SCR catalyst 41. The ammonia adsorbed by the SCR catalyst 41 reduces and purifies NOx.

Other than the above, the internal combustion engine 1 includes an exhaust gas recirculation device (hereinafter, referred to as EGR device). The exhaust gas recirculation device includes an EGR passage 13, an EGR cooler 14 and an EGR valve 15. The EGR passage 13 provides fluid communication between the intake passage 3 and the exhaust manifold 8. The EGR cooler 14 and the EGR valve 15 are provided in the EGR passage 13. An exhaust gas recirculation amount (external EGR amount) that is introduced from the exhaust passage 26 to the intake passage 3 is regulated by adjusting the opening degree of the EGR valve 15. The temperature of exhaust gas flowing through the EGR passage 13 is decreased by the EGR cooler 14.

Various sensors for detecting an engine operating state are attached to the internal combustion engine 1. For example, an air flow meter 19 detects an intake air flow rate GA in the intake passage 3. A throttle valve opening degree sensor 20 detects the opening degree of the intake air throttle valve 16. An engine rotation speed sensor 21 detects the rotation speed of a crankshaft (engine rotation speed NE). An accelerator sensor 22 detects the depression amount of an accelerator pedal (accelerator operation amount ACCP). An outside air temperature sensor 23 detects an outside air temperature THout. A vehicle speed sensor 24 detects a vehicle speed SPD of a vehicle on which the internal combustion engine 1 is mounted. An ignition switch 25 detects start operation and stop operation of the internal combustion engine 1, conducted by a driver of the vehicle.

A first exhaust gas temperature sensor 100 detects a first exhaust gas temperature TH1. The first exhaust gas temperature sensor 100 is provided upstream of the oxidation catalyst 31 in the exhaust gas flow direction. The first exhaust gas temperature TH1 is an exhaust gas temperature before exhaust gas flows into the oxidation catalyst 31. A differential pressure sensor 110 detects a pressure difference $\Delta P$ in order to detect a PM deposition state. The pressure difference $\Delta P$ is a pressure difference between an exhaust gas pressure upstream of the DPF catalyst 32 in the exhaust gas flow direction and an exhaust gas pressure downstream of the DPF catalyst 32 in the exhaust gas flow direction.

A second exhaust gas temperature sensor 120 and a first NOx sensor 130 are provided in the exhaust passage 26 between the first purification member 30 and the second purification member 40 at a location upstream of the urea aqueous solution addition valve 230. The second exhaust gas temperature sensor 120 detects a second exhaust gas temperature (pre-SCR exhaust gas temperature) TH2. The second exhaust gas temperature TH2 is an exhaust gas temperature before exhaust gas flows into the SCR catalyst 41. The first NOx sensor 130 detects a first NOx concentration N1. The first NOx concentration N1 is a NOx concentration in exhaust gas before the exhaust gas flows into the SCR catalyst 41.

A second NOx sensor 140 is provided in the exhaust passage 26 at a location downstream of the third purification member 50 in the exhaust gas flow direction. The second NOx sensor 140 detects a second NOx concentration N2. The second NOx concentration N2 is the NOx concentration of exhaust gas purified by the SCR catalyst 41.

Outputs of these various sensors, and the like, are input to a control device 80. The control device 80 is mainly formed of a microcomputer that includes a CPU, a ROM, a RAM, a timer counter, an input interface, an output interface, and the like.

Various controls are executed by the control device 80. The various controls over the internal combustion engine 1, for example, include fuel injection amount control/fuel injection timing control over the fuel injection valves 4a to 4d and the fuel addition valve 5, discharge pressure control over the supply pump 10, drive amount control over an actuator 17, opening degree control over the EGR valve 15, opening degree control over the nozzle vane 11v, and the like. The actuator 17 opens or closes the intake air throttle valve 16. Various exhaust gas purification controls, including the above-described regeneration process for burning PM trapped by the DPF catalyst 32, are executed. Addition control for adding urea aqueous solution with the use of the urea aqueous solution addition valve 230 is executed.

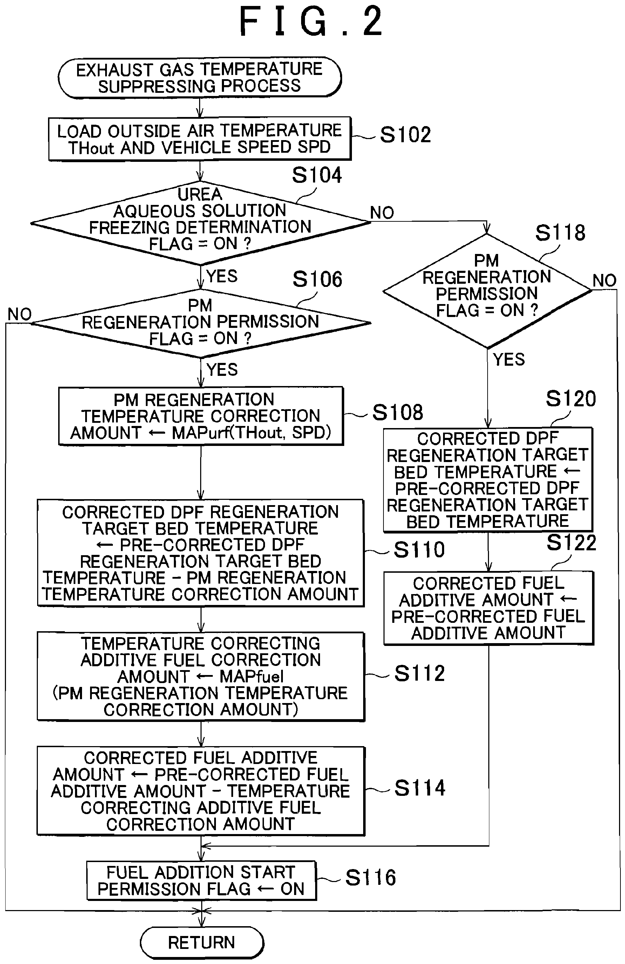

In the addition control for adding urea aqueous solution, an urea additive amount QE required to reduce NOx that is emitted from the internal combustion engine 1 is calculated on the basis of the engine operating state, and the like. Valve opening control over the urea aqueous solution addition valve 230 is executed such that the calculated urea additive amount QE is injected from the urea aqueous solution addition valve 230. The embodiment of the aspect of the invention will be described on the basis of the exhaust gas temperature suppression process shown in FIG 2. The exhaust gas temperature suppression process is a control process that is executed by the control device 80. This process is repeatedly executed at short time intervals. Steps in the flowchart, corresponding to individual process details, are indicated by "S***".

When the exhaust gas temperature suppression process is started, the outside air temperature THout and the vehicle speed SPD are loaded on the basis of detected signals from the outside air temperature sensor 23 and the vehicle speed sensor 24 (S102). Subsequently, it is determined whether an urea aqueous solution freezing determination flag is set to the ON state (S104). Here, the urea aqueous solution freezing determination flag is set to the ON state when it has been detected that urea aqueous solution is frozen, and is set to the OFF state when urea aqueous solution is not frozen. The urea aqueous solution freezing determination flag is set through a freezing detection process for detecting freezing of urea aqueous solution in the urea aqueous solution supply mechanism 200. The freezing detection process is separately executed by the control device 80.

In the freezing detection process, for example, it is determined that urea aqueous solution is frozen when the urea aqueous solution temperature THurea is lower than the melting point, and it is determined that urea aqueous solution is not frozen when the urea aqueous solution temperature THurea is higher than or equal to the melting point. The urea aqueous solution temperature THurea is detected by the urea aqueous solution temperature sensor 210a. Alternatively, the pump 220 is driven within a predetermined temperature range including the melting point of urea aqueous solution, and an urea aqueous solution pressure Purea is detected by the urea aqueous solution pressure sensor 240a. At this time, it is determined that urea aqueous solution is not frozen when the urea aqueous solution pressure Purea rises, and it is determined that urea aqueous solution is frozen when the urea aqueous solution pressure Purea does not rise. The freezing detection process for detecting freezing of urea aqueous solution may be executed through a method other than the above.

In the above freezing detection process, the urea aqueous solution freezing determination flag is set to the ON state when urea aqueous solution is frozen, and is set to the OFF state when urea aqueous solution is not frozen. Furthermore, when urea aqueous solution is frozen, the control device 80 unfreezes urea aqueous solution in the tank 210 and the supply passage 240 by energizing the heater 210b. Instead of the heater 210b, frozen urea aqueous solution may be unfrozen by coolant of the internal combustion engine 1 being circulated through lines installed in the tank 210 and around the supply passage 240.

Here, when the urea aqueous solution freezing determination flag is set to the ON state (YES in S104), it is subsequently determined whether a PM regeneration permission flag is set to the ON state (S106). A PM deposition amount in the DPF catalyst 32 is detected on the basis of the pressure difference ΔP between an exhaust gas pressure upstream of the DPF catalyst 32 in the exhaust gas flow direction and an exhaust gas pressure downstream of the DPF catalyst 32 in the exhaust gas flow direction. The pressure difference ΔP in exhaust gas pressure is detected by the differential pressure sensor 110. When the pressure difference ΔP detected by the differential pressure sensor 110 becomes higher than or equal to a predetermined pressure, it is determined that a PM regeneration condition is satisfied, and the PM regeneration permission flag is set to the ON state. When the PM regeneration permission flag is set to the ON state, the PM regeneration process is executed.

In the PM regeneration process, the bed temperature of the DPF catalyst 32 is adjusted to a DPF regeneration target bed temperature by introducing high-temperature exhaust gas to the DPF catalyst 32. The temperature of exhaust gas is raised by causing the oxidation catalyst 31 to generate heat due to fuel that is added from the fuel addition valve 5. Thus, PM deposited in the DPF catalyst 32 is burned, and the filter function of the DPF catalyst 32 is regenerated (PM regeneration). When the regeneration has been completed, the PM regeneration permission flag is set to the OFF state.

Here, when the PM regeneration permission flag is not set to the ON state, that is, when the PM regeneration permission flag is in the OFF state (NO in S106), the process then exits from the routine. When the PM regeneration permission flag is in the ON state (YES in S106), a PM regeneration temperature correction amount is set through a map MAPurf as expressed by the mathematical expression 1 (S108). The PM regeneration temperature correction amount is set on the basis of the above-described outside air temperature THout and vehicle speed SPD.

[Mathematical Expression 1]    (PM regeneration temperature correction amount) ←

MAPurf(THout, SPD)

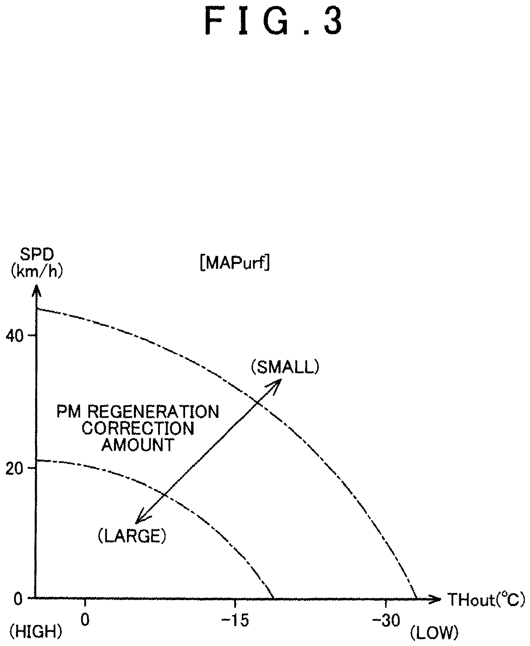

Here, the map MAPurf is shown in FIG. 3. That is, as indicated by alternate long and short dashed contour lines, the PM regeneration temperature correction amount is set to reduce as the outside air temperature THout decreases and is set to increase as the outside air temperature THout rises. The PM regeneration temperature correction amount is set to reduce as the vehicle speed SPD increases and is set to increase as the vehicle speed SPD decreases.

This is because, as the outside air temperature THout decreases or as the vehicle speed SPD increases, the effect of cooling the urea aqueous solution addition valve 230 by outside air is large; whereas, as the outside air temperature THout increases or as the vehicle speed SPD decreases, the effect of cooling the urea aqueous solution addition valve 230 by outside air is small.

In this way, a corrected DPF regeneration target bed temperature is calculated from a pre-corrected DPF regeneration target bed temperature through the mathematical expression 2 using the PM regeneration temperature correction amount obtained from the map MAPurf (S110).

[Mathematical Expression 2]   (Corrected DPF regeneration target bed temperature) $\leftarrow$ (Pre-corrected DPF regeneration target bed temperature)   - (PM regeneration temperature correction amount)

Here, the pre-corrected DPF regeneration target bed temperature is a target bed temperature of the DPF catalyst 32 at the time of PM regeneration in an initial stage. The pre-corrected DPF regeneration target bed temperature is decreased by the PM regeneration temperature correction amount, and is set as the corrected DPF regeneration target bed temperature.

Thus, the corrected DPF regeneration target bed temperature is set so as to approach the pre-corrected DPF regeneration target bed temperature as the outside air temperature THout decreases, and is set to be lower by a larger amount than the pre-corrected DPF regeneration target bed temperature as the outside air temperature THout rises. The corrected DPF regeneration target bed temperature is set to approach the pre-corrected DPF regeneration target bed temperature as the vehicle speed SPD increases, and is set to be lower by a larger amount than the pre-corrected DPF regeneration target bed temperature as the vehicle speed SPD decreases.

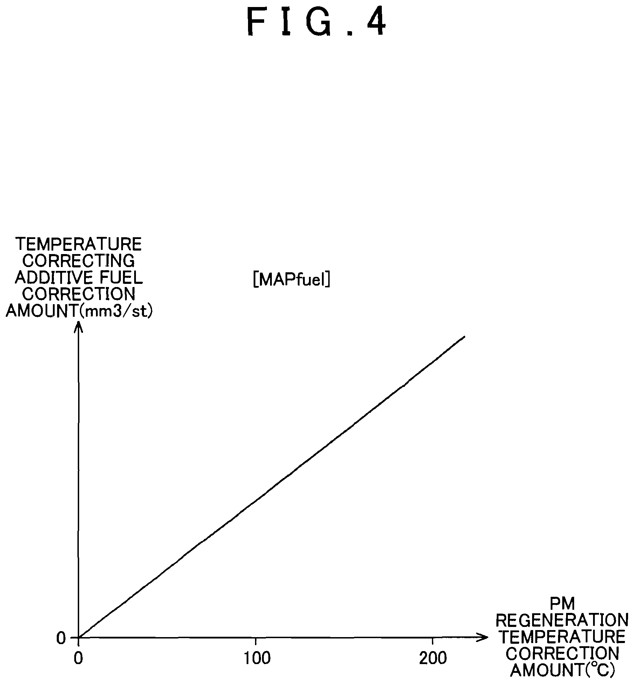

Subsequently, a temperature correcting additive fuel correction amount (mm3/st) is calculated on the basis of the PM regeneration temperature correction amount by consulting the map MAPfuel shown in FIG. 4 (S112). That is, a fuel amount to be reduced in correspondence with the PM regeneration temperature correction amount is calculated as the temperature correcting additive fuel correction amount.

In this way, a corrected fuel additive amount is calculated from a pre-corrected fuel additive amount through the mathematical expression 3 using the temperature correcting additive fuel correction amount obtained from the map MAPfuel (SI14).

[Mathematical Expression 3]   (Corrected fuel additive amount) $\leftarrow$ (Pre-corrected fuel additive amount)   - (Temperature correcting additive fuel correction amount)

A fuel addition start permission flag is set to the ON state (S116), and then the process is exited.

Thus, it is possible to add fuel that is supplied from the fuel addition valve 5 in order to regenerate the DPF catalyst 32, and fuel is supplied to the oxidation catalyst 31. Therefore, the temperature of exhaust gas that is supplied from the oxidation catalyst 31 to the DPF catalyst 32 rises, and the catalyst bed temperature of the DPF catalyst 32 is adjusted to the corrected DPF regeneration target bed temperature.

After that, as long as affirmative determination is made in step S104, the above-described process is repeated. When the frozen urea aqueous solution has been unfrozen and the urea aqueous solution freezing determination flag has changed to the OFF state (NO in S104), it is subsequently determined whether the PM regeneration permission flag is set to the ON state (S118).

When the PM regeneration permission flag is in the OFF state (NO in S118), the process then exits from the routine. When the PM regeneration permission flag is in the ON state (YES in S118), the processes of the above-described steps S108 to step S114 are not executed. The pre-corrected DPF regeneration target bed temperature is directly set as the corrected DPF regeneration target bed temperature (S120), and the pre-corrected fuel additive amount is directly set as the corrected fuel additive amount (S122). Then, the fuel addition start permission flag is immediately set to the ON state (S116), and then the process exits from the routine.

That is, when urea aqueous solution is not frozen, the PM regeneration process is executed as usual. A combination of the urea aqueous solution supply mechanism 200 and the control device 80 that controls the urea aqueous solution supply mechanism 200 corresponds to a reducing agent addition system. The exhaust gas temperature suppression process (FIG. 2) that is executed by the control device 80 corresponds to a process that serves as an exhaust gas temperature suppressor.

In the above-described embodiment, (1) through the exhaust gas temperature suppression process (FIG. 2), the processes (S108 to S114) of decreasing the exhaust gas temperature in the exhaust passage 26 are executed when it is not possible to add urea aqueous solution into the exhaust passage 26. When it is not possible to add urea aqueous solution into the exhaust passage 26, urea aqueous solution is frozen (YES in S104), and the exhaust gas temperature suppression process is different from that when urea aqueous solution is not frozen.

In the present embodiment, in the PM regeneration process executed at the DPF catalyst 32, a rise in the temperature of exhaust gas due to the PM regeneration process is suppressed by executing a temperature decreasing process (S108 to S114) for decreasing a regeneration temperature (corrected DPF regeneration target bed temperature). Thus, an overheat of the urea aqueous solution addition valve 230 is suppressed, even when the urea aqueous solutioin addition valve 230 cannot be cooled due to freezing of urea aqueous solution.

(2) As the outside air temperature THout rises, the effect of radiating heat of the exhaust passage 26 decreases. Thus, the temperature of the urea aqueous solution addition valve 230 also rises and is easily overheated. Therefore, in the exhaust gas temperature suppression process (FIG. 2), by consulting the map MAPurf (FIG 3) and the map MAPfuel (FIG. 4), as the outside air temperature THout rises, the amount of decrease in the exhaust gas temperature in the exhaust passage 26 is increased (S108, S112). That is, as the outside air temperature THout rises, the PM regeneration temperature correction amount and the temperature correcting additive fuel correction amount are increased to increase the amount of decrease in the exhaust gas temperature. Thus, it is possible to suppress an overheat of the urea aqueous solution addition valve 230 due to exhaust gas by decreasing the exhaust gas temperature.

(3) As the vehicle speed SPD decreases, the effect of radiating heat of the exhaust passage 26 through draft decreases. Thus, the temperature of the urea aqueous solution addition valve 230 also rises, and the urea aqueous solution addition valve 230 is easily overheated. Therefore, in the exhaust gas temperature suppression process (FIG. 2), by consulting the map MAPurf (FIG 3) and the map MAPfuel (FIG. 4), as the vehicle speed SPD decreases, the amount of decrease in the exhaust gas temperature in the exhaust passage 26 is increased (S108, S112). That is, as the vehicle speed SPD decreases, the PM regeneration temperature correction amount and the temperature correcting additive fuel correction amount are increased to increase the amount of decrease in the exhaust gas temperature. Thus, it is possible to suppress an overheat of the urea aqueous solution addition valve 230 due to exhaust gas by decreasing the exhaust gas temperature.

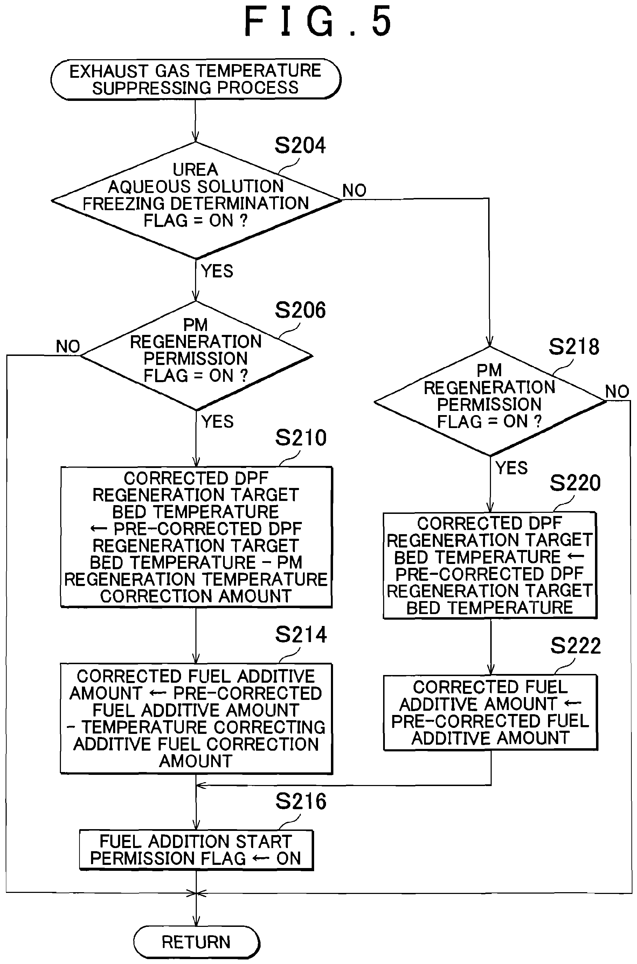

In the exhaust gas temperature suppression process according to an embodiment of the aspect of the invention shown in FIG. 5, the outside air temperature THout and the vehicle speed SPD are not used to obtain a PM regeneration temperature correction amount and a temperature correcting additive fuel correction amount. According to this embodiment, when urea aqueous solution has frozen, the corrected DPF regeneration target bed temperature is obtained by reducing the pre-corrected DPF regeneration target bed temperature by a predetermined PM regeneration temperature correction amount. In addition, a corrected fuel additive amount is obtained by reducing the pre-corrected fuel additive amount by the temperature correcting additive fuel correction amount corresponding to the predetermined PM regeneration temperature correction amount. Thus, the corrected DPF regeneration target bed temperature decreases, and the corrected fuel additive amount reduces.

The other configuration is the same as that of the embodiment shown in FIG 2, so description will be made also with reference to FIG. 1. The operation of the present embodiment will be described on the basis of the exhaust gas temperature suppression process shown in FIG. 5. The exhaust gas temperature suppression process (FIG. 5) is also repeatedly executed by the control device 80 at short time intervals.

As the exhaust gas temperature suppression process (FIG 5) is started, it is initially determined whether the urea aqueous solution freezing determination flag is set to the ON state (S204). The urea aqueous solution freezing determination flag is the one as described in the embodiment shown in FIG 2.

Here, when the urea aqueous solution freezing determination flag is set to the ON state (YES in S204), it is subsequently determined whether the PM regeneration permission flag is set to the ON state (S206). The PM regeneration permission flag is the one as described in the embodiment shown in FIG. 2.

Here, when the PM regeneration permission flag is not set to the ON state, that is, when the PM regeneration permission flag is set to the OFF state (NO in S206), the process then exits from the routine. When the PM regeneration permission flag is set to the ON state (YES in S206), the corrected DPF regeneration target bed temperature is calculated from the pre-corrected DPF regeneration target bed temperature through the mathematical expression 2 using the PM regeneration temperature correction amount set to a constant value in advance (S210). Here, the pre-corrected DPF regeneration target bed temperature and the corrected DPF regeneration target bed temperature are the ones as described in the embodiment shown in FIG. 2.

Thus, the corrected DPF regeneration target bed temperature is set so as to be lower than the pre-corrected DPF regeneration target bed temperature by an amount corresponding to the PM regeneration temperature correction amount. Subsequently, the corrected fuel additive amount is calculated from the pre-corrected fuel additive amount through the mathematical expression 3 using the temperature correcting additive fuel correction amount that is set to a constant value in advance in correspondence with the PM regeneration temperature correction amount (S214).

The fuel addition start permission flag is set to the ON state (S216), and then the process exits from the routine. Thus, it is possible to add fuel that is supplied from the fuel addition valve 5 in order to regenerate the DPF catalyst 32, and fuel is supplied to the oxidation catalyst 31. Thus, the temperature of exhaust gas that is supplied from the oxidation catalyst 31 to the DPF catalyst 32 rises, and the catalyst bed temperature of the DPF catalyst 32 is adjusted to the corrected DPF regeneration target bed temperature.

After that, as long as affirmative determination is made in step S204, the above-described process is repeated. When the frozen urea aqueous solution has been unfrozen and the urea aqueous solution freezing determination flag has changed to the OFF state (NO in S204), it is subsequently determined whether the PM regeneration permission flag is set to the ON state (S218).

When the PM regeneration permission flag is in the OFF state (NO in S218), the process then exits from the routine. When the PM regeneration permission flag is in the ON state (YES in S218), the processes of the above-described step S210, step S214 are not executed. The pre-corrected DPF regeneration target bed temperature is directly set as the corrected DPF regeneration target bed temperature (S220), and the pre-corrected fuel additive amount is directly set as the corrected fuel additive amount (S222). Then, the fuel addition start permission flag is immediately set to the ON state (S216), and then the process exits from the routine.

That is, when urea aqueous solution is not frozen, the PM regeneration process is executed as usual. A combination of the urea aqueous solution supply mechanism 200 and the control device 80 that controls the urea aqueous solution supply mechanism 200 corresponds to a reducing agent addition system. The exhaust gas temperature suppression process (FIG 5) that is executed by the control device 80 corresponds to a process that serves as an exhaust gas temperature suppressor.

In the above-described embodiment, (1) at the time of detecting freezing of urea aqueous solution, it is possible to suppress a rise in the temperature of exhaust gas due to the PM regeneration process by executing a simple temperature decreasing process (S210, S214). The simple temperature decreasing process (S210, S214) is executed using the predetermined PM regeneration temperature correction amount and the predetermined temperature correcting additive fuel correction amount. Thus, an overheat of the urea aqueous solution addition valve 230 is suppressed even when the urea aqueous solution addition valve 230 cannot be cooled due to freezing of urea aqueous solution.

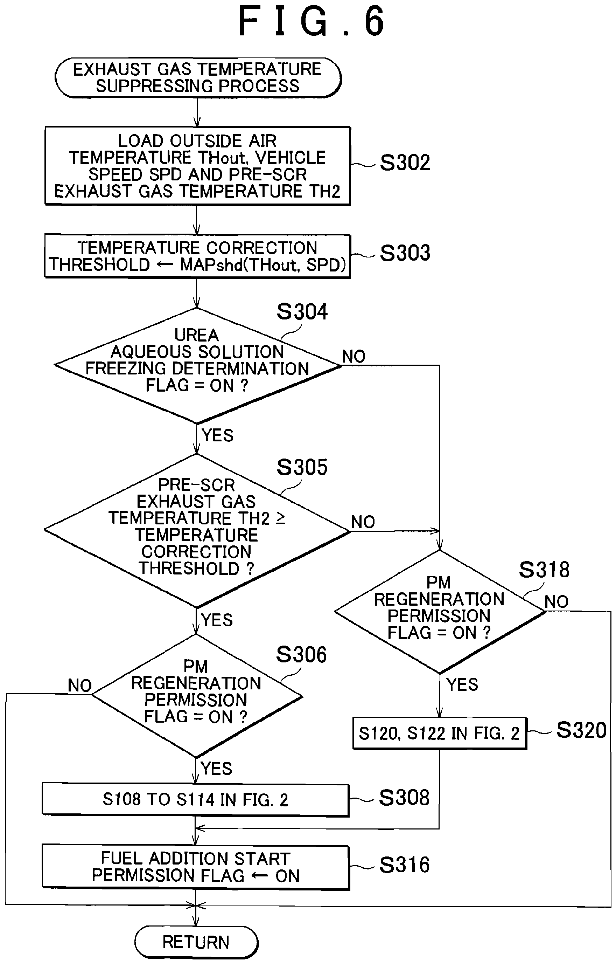

In the exhaust gas temperature suppression process according to an embodiment of the aspect of the invention shown in FIG. 6, when urea aqueous solution has frozen, a pre-SCR exhaust gas temperature (second exhaust gas temperature) TH2 that is an exhaust gas temperature before exhaust gas flows into the SCR catalyst 41 is suppressed by setting an upper limit to the pre-SCR exhaust gas temperature TH2.

The other configuration is the same as that of the embodiment shown in FIG. 2, so description will be made also with reference to FIG. 1. The operation of the present embodiment will be described on the basis of the exhaust gas temperature suppression process shown in FIG. 6. The exhaust gas temperature suppression process (FIG. 6) is also repeatedly executed by the control device 80 at short time intervals.

As the exhaust gas temperature suppression process (FIG. 6) is started, the outside air temperature THout, the vehicle speed SPD and the pre-SCR exhaust gas temperature TH2 are loaded on the basis of detected signals from the outside air temperature sensor 23, the vehicle speed sensor 24 and the second exhaust gas temperature sensor 120 (S302).

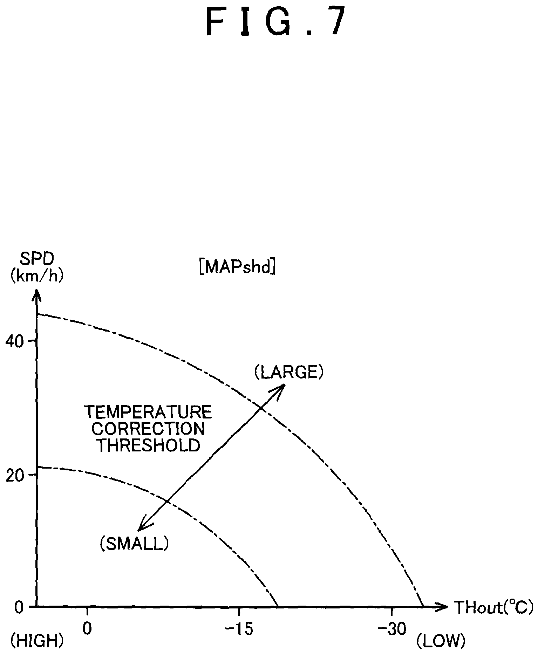

Subsequently, a temperature correction threshold is set on the basis of the outside air temperature THout and the vehicle speed SPD by consulting a map MAPshd shown in FIG. 7 (S303). The temperature correction threshold is a threshold for setting an upper limit to the temperature of exhaust gas flowing into the SCR catalyst 41. That is, as indicated by alternate long and short dashed contour lines, the temperature correction threshold is set to reduce as the outside air temperature THout rises and is set to increase as the outside air temperature THout decreases. The temperature correction threshold is set to reduce as the vehicle speed SPD decreases and is set to increase as the vehicle speed SPD increases.

This is because, as the outside air temperature THout decreases or as the vehicle speed SPD increases, the effect of cooling the urea aqueous solution addition valve 230 by outside air is large; whereas, as the outside air temperature THout increases or as the vehicle speed SPD decreases, the effect of cooling the urea aqueous solution addition valve 230 by outside air is small.

Subsequently, it is determined whether an urea aqueous solution freezing determination flag is set to the ON state (S304). The urea aqueous solution freezing determination flag is the one as described in the embodiment shown in FIG. 2. Here, when the urea aqueous solution freezing determination flag is set to the ON state (YES in S304), it is subsequently determined whether the pre-SCR exhaust gas temperature TH2 loaded in step S302 is higher than or equal to the temperature correction threshold set in step S303 (S305).

When the pre-SCR exhaust gas temperature TH2 is higher than or equal to the temperature correction threshold (YES in S305), it is subsequently determined whether the PM regeneration permission flag is set to the ON state (S306). The PM regeneration permission flag is the one as described in the embodiment shown in FIG. 2.

Here, when the PM regeneration permission flag is not set to the ON state, that is, when the PM regeneration permission flag is set to the OFF state (NO in S306), the process then exits from the routine. When the PM regeneration permission flag is in the ON state (YES in S306), the processes described in step S108 to step S114 shown in FIG. 2 are executed (S308). That is, the corrected DPF regeneration target bed temperature and the corrected fuel additive amount corresponding to the corrected DPF regeneration target bed temperature are set.

A fuel addition start permission flag is set to the ON state (S316), and then the process exits from the routine. Thus, it is possible to add fuel that is supplied from the fuel addition valve 5 in order to regenerate the DPF catalyst 32, and fuel is supplied to the oxidation catalyst 31. Thus, the temperature of exhaust gas that is supplied from the oxidation catalyst 31 to the DPF catalyst 32 rises, and the catalyst bed temperature of the DPF catalyst 32 is adjusted to the corrected DPF regeneration target bed temperature.

When the pre-SCR exhaust gas temperature TH2 is lower than the temperature correction threshold (NO in S305), it is subsequently determined whether the PM regeneration permission flag is set to the ON state (S318). When the PM regeneration permission flag is set to the OFF state (NO in S318), the process then exits from the routine.

When the PM regeneration permission flag is in the ON state (YES in S318), the processes described in step S120, step S122 shown in FIG. 2 are executed (S320). That is, the corrected DPF regeneration target bed temperature, of which the temperature is not corrected, and the corrected fuel additive amount corresponding to the corrected DPF regeneration target bed temperature are set.

That is, when urea aqueous solution is frozen but the exhaust gas temperature is a temperature by which the urea aqueous solution addition valve 230 is not likely to be overheated, the PM regeneration process is executed as usual. The fuel addition start permission flag is set to the ON state (S316), and then the process exits from the routine.

After that, as long as affirmative determination is made in step S304, the above-described process is repeated. When the frozen urea aqueous solution has been unfrozen and the urea aqueous solution freezing determination flag has changed to the OFF state (NO in S304), it is subsequently determined whether the PM regeneration permission flag is set to the ON state (S318).

When the PM regeneration permission flag is set to the OFF state (NO in S318), the process then exits from the routine. When the PM regeneration permission flag is in the ON state (YES in S318), the processes described in step S120, step S122 shown in FIG. 2 are executed. That is, the corrected DPF regeneration target bed temperature, of which the temperature is not corrected, and the corrected fuel additive amount corresponding to the corrected DPF regeneration target bed temperature are set. The fuel addition start permission flag is immediately set to the ON state (S316), and then the process exits from the routine.

That is, when urea aqueous solution is not frozen, the PM regeneration process is executed as usual. A combination of the urea aqueous solution supply mechanism 200 and the control device 80 that controls the urea aqueous solution supply mechanism 200 corresponds to a reducing agent addition system. The exhaust gas temperature suppression process (FIG. 6) that is executed by the control device 80 corresponds to a process that serves as an exhaust gas temperature suppressor.

In the above-described embodiment, (1) in the exhaust gas temperature suppression process (FIG. 6), when it is not possible to add urea aqueous solution into the exhaust passage 26 due to freezing (YES in S304) and when the pre-SCR exhaust gas temperature TH2 is higher than or equal to the temperature correction threshold (YES in S305), the temperature decreasing process (S108 to S114) of decreasing a regeneration temperature (corrected DPF regeneration target bed temperature)in PM regeneration process at the DPF catalyst 32 is executed.

Thus, the exhaust gas temperature as a result of the PM regeneration process is suppressed to a temperature lower than the temperature correction threshold by executing an upper limit setting process (S303, S305, S308) for suppressing the PM regeneration temperature by setting an upper limit to the exhaust gas temperature in the exhaust passage 26. Thus, an overheat of the urea aqueous solution addition valve 230 is suppressed even when the urea solution addition valve 230 cannot be cooled due to freezing of urea aqueous solution.

(2) As the outside air temperature THout rises, the urea aqueous solution addition valve 230 is more easily overheated. As the vehicle speed SPD decreases, the urea aqueous solution addition valve 230 is more easily overheated. Thus, as shown in the map MAPshd (FIG 7), the temperature correction threshold for suppressing the pre-SCR exhaust gas temperature TH2 is set to decrease as the outside air temperature THout rises and is set to increase as the outside air temperature THout decreases. The temperature correction threshold is set to reduce as the vehicle speed SPD decreases and is set to increase as the vehicle speed SPD increases. Thus, it is possible to suppress an overheat of the urea aqueous solution addition valve 230 due to exhaust gas.
(3) The advantageous effects of (2), (3) according to the above-described embodiment shown in Fig.2 are obtained from step S108 to step S114.

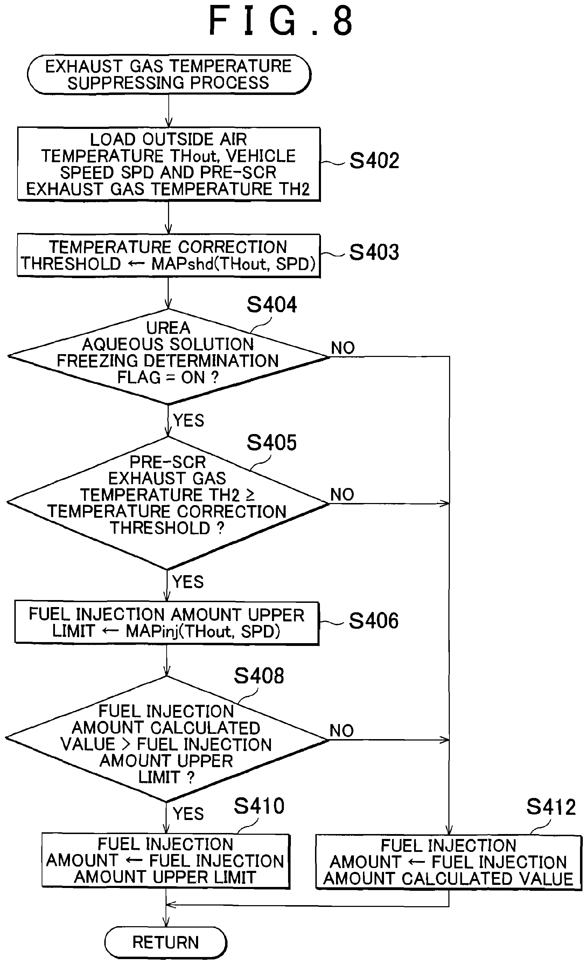

In the exhaust gas temperature suppression process according to an embodiment of the aspect of the invention shown in FIG. 8, when urea aqueous solution has frozen, the amount of fuel that is injected from each of the fuel injection valves 4a to 4d into a corresponding one of the cylinders #1 to #4 is limited by setting an upper limit to the amount of fuel injected.

The other configuration is the same as that of the embodiment shown in FIG. 2, so description will be made also with reference to FIG. 1. The operation of the present embodiment will be described on the basis of the exhaust gas temperature suppression process shown in FIG. 8. The exhaust gas temperature suppression process (FIG 8) is also repeatedly executed by the control device 80 at short time intervals.

As the exhaust gas temperature suppression process (FIG. 8) is started, the outside air temperature THout, the vehicle speed SPD and the pre-SCR exhaust gas temperature TH2 are loaded on the basis of detected signals from the outside air temperature sensor 23, the vehicle speed sensor 24 and the second exhaust gas temperature sensor 120 (S402).

Subsequently, a temperature correction threshold is set on the basis of the outside air temperature THout and the vehicle speed SPD by consulting the map MAPshd shown in FIG. 7 (S403). The temperature correction threshold is the one as described in the embodiment shown in Fig. 6.

Subsequently, it is determined whether an urea aqueous solution freezing determination flag is set to the ON state (S404). The urea aqueous solution freezing determination flag is the one as described in the embodiment shown in FIG 2. Here, when the urea aqueous solution freezing determination flag is set to the ON state (YES in S404), it is subsequently determined whether the pre-SCR exhaust gas temperature TH2 loaded in step S402 is higher than or equal to the temperature correction threshold set in step S403 (S405).

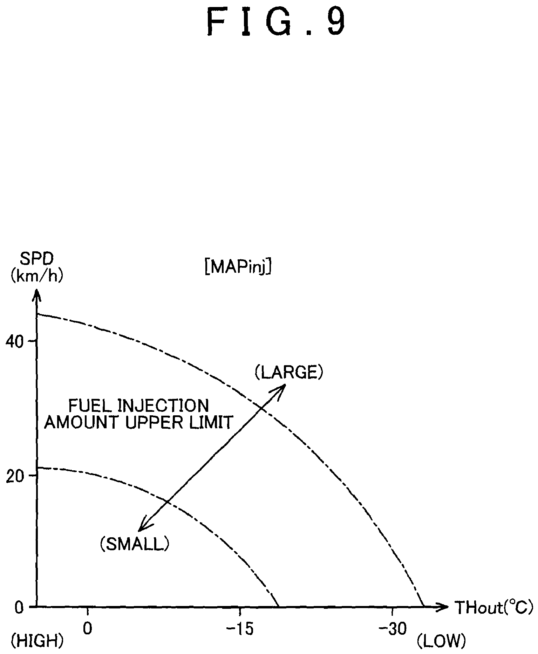

When the pre-SCR exhaust gas temperature TH2 is higher than or equal to the temperature correction threshold (YES in S405), a fuel injection amount upper limit is set on the basis of the outside air temperature THout and the vehicle speed SPD by consulting a map MAPinj shown in FIG. 9 (S406).

The fuel injection amount upper limit is a value that is set to an upper limit of the amount of fuel per injection (mm3/st), which is injected from each of the fuel injection valves 4a to 4d into a corresponding one of the cylinders #1 to #4. That is, as indicated by alternate long and short dashed contour lines, the fuel injection amount upper limit is set to a smaller amount as the outside air temperature THout rises and is set to a larger amount as the outside air temperature THout decreases. The fuel injection amount upper limit is set to a smaller amount as the vehicle speed SPD decreases and is set to a larger amount as the vehicle speed SPD increases.

This is because, as the outside air temperature THout decreases or as the vehicle speed SPD increases, the effect of cooling the urea aqueous solution addition valve 230 by outside air is large; whereas, as the outside air temperature THout increases or as the vehicle speed SPD decreases, the effect of cooling the urea aqueous solution addition valve 230 by outside air is small.

Subsequently, it is determined whether a fuel injection amount calculated value, that is calculated through a fuel injection amount control process that is executed by the control device 80, exceeds the fuel injection amount upper limit set in step S406 (S408).

Here, when the fuel injection amount calculated value is larger than the fuel injection amount upper limit (fuel injection amount calculated value > fuel injection amount upper limit) (YES in S408), a value equal to the fuel injection amount upper limit is set as a fuel injection amount that is actually injected (S410), and then the process exits from the routine.

When the fuel injection amount calculated value is smaller than or equal to the fuel injection amount upper limit (fuel injection amount calculated value $\leq$ fuel injection amount upper limit) (NO in S408), the fuel injection amount calculated value is directly set to a fuel injection amount that is actually injected (S412), and then the process exits from the routine. After that, when urea aqueous solution is frozen (YES in S404) and when the state where the pre-SCR exhaust gas temperature TH2 is higher than or equal to the temperature correction threshold (pre-SCR exhaust gas temperature TH2 $\geq$ temperature correction threshold) is continuing (YES in S405), the fuel injection amount that is burned in each of the cylinders #1 to #4 is adjusted in a state where an upper limit is limited by the fuel injection amount upper limit.

When the urea aqueous solution freezing determination flag is set to the OFF state (NO in S404) or when the pre-SCR exhaust gas temperature TH2 is lower than the temperature correction threshold (pre-SCR exhaust gas temperature TH2 < temperature correction threshold) (NO in S405), the fuel injection amount calculated value is directly set to the fuel injection amount without being limited by the fuel injection amount upper limit (S412). A combination of the urea aqueous solution supply mechanism 200 and the control device 80 that controls the urea aqueous solution supply mechanism 200 corresponds to a reducing agent addition system. The exhaust gas temperature suppression process (FIG. 8) that is executed by the control device 80 corresponds to a process that serves as an exhaust gas temperature suppressor.

In the above-described embodiment, (1) a rise in the temperature of exhaust gas also occurs due to an increase in the fuel injection amount that is burned in the internal combustion engine 1. Therefore, in the exhaust gas temperature suppression process (FIG 8), when it is not possible to add urea aqueous solution into the exhaust passage 26 due to freezing, an upper limit setting process of setting an upper limit to the fuel injection amount of the internal combustion engine 1 is executed (S406 to S410). Thus, it is possible to suppress a rise in the temperature of exhaust gas, so an overheat of the urea aqueous solution addition valve 230 due to exhaust gas is suppressed.

(2) As the outside air temperature THout rises, the urea aqueous solution addition valve 230 is more easily overheated. As the vehicle speed SPD decreases, the urea aqueous solution addition valve 230 is more easily overheated. Thus, the fuel injection amount upper limit for limiting the fuel injection amount by consulting the map MAPinj (FIG 9) is set to a smaller amount as the outside air temperature THout rises, and is set to a larger amount as the outside air temperature THout decreases. The fuel injection amount upper limit is set to a smaller amount as the vehicle speed SPD decreases, and is set to a larger amount as the vehicle speed SPD increases. Thus, it is possible to suppress an overheat of the urea aqueous solution addition valve 230 due to exhaust gas.

(3) The advantageous effect of (2) according to the embodiment shown in FIG 6 is obtained.

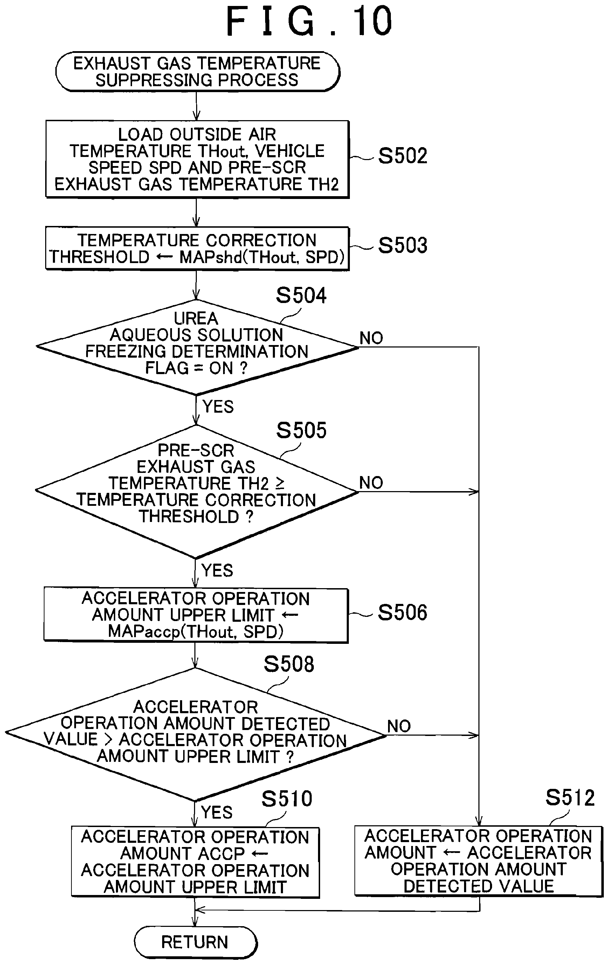

In the exhaust gas temperature suppression process according to an embodiment of the aspect of the invention shown in FIG. 10, when urea aqueous solution has frozen, an upper limit of the accelerator operation amount ACCP is set. The accelerator operation amount ACCP is detected by the accelerator sensor 22 and is used in fuel injection amount control.

The other configuration is the same as that of the embodiment shown in FIG. 2, so description will be made also with reference to FIG. 1. The operation of the present embodiment will be described on the basis of the exhaust gas temperature suppression process shown in FIG. 10. The exhaust gas temperature suppression process (FIG. 10) is also repeatedly executed by the control device 80 at short time intervals.

As the exhaust gas temperature suppression process (FIG 10) is started, the outside air temperature THout, the vehicle speed SPD and the pre-SCR exhaust gas temperature TH2 are loaded on the basis of detected signals from the outside air temperature sensor 23, the vehicle speed sensor 24 and the second exhaust gas temperature sensor 120 (S502).

Subsequently, a temperature correction threshold is set on the basis of the outside air temperature THout and the vehicle speed SPD by consulting the map MAPshd shown in FIG. 7 (S503). The temperature correction threshold is the one as described in the embodiment shown in Fig. 6.

Subsequently, it is determined whether an urea aqueous solution freezing determination flag is set to the ON state (S504). The urea aqueous solution freezing determination flag is the one as described in the embodiment shown in FIG. 2. Here, when the urea aqueous solution freezing determination flag is set to the ON state (YES in S504), it is subsequently determined whether the pre-SCR exhaust gas temperature TH2 loaded in step S502 is higher than or equal to the temperature correction threshold set in step S503 (S505).

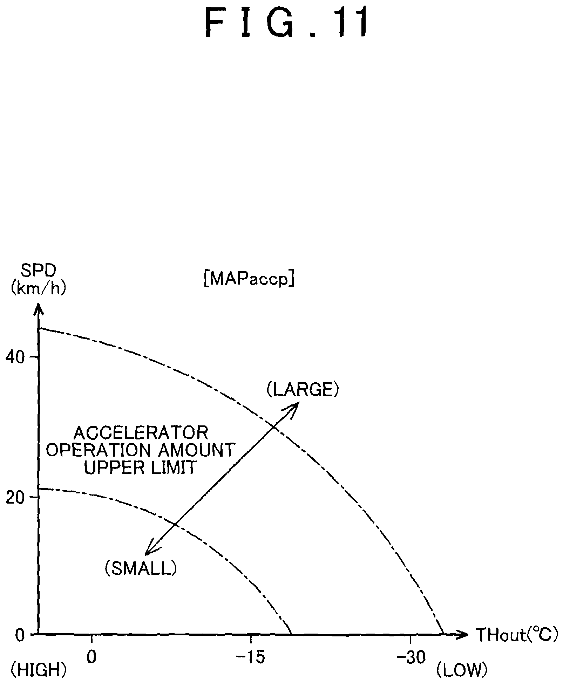

When the pre-SCR exhaust gas temperature TH2 is higher than or equal to the temperature correction threshold (pre-SCR exhaust gas temperature TH2 $\geq$ temperature correction threshold) (YES in S505), an accelerator operation amount upper limit is set on the basis of the outside air temperature THout and the vehicle speed SPD by consulting a map MAPaccp shown in FIG. 11 (S506).

The accelerator operation amount upper limit is set as an upper limit when the accelerator operation amount detected by the accelerator sensor 22 is actually used in fuel injection amount control. That is, as indicated by alternate long and short dashed contour lines, the accelerator operation amount upper limit is set to reduce as the outside air temperature THout rises, and is set to increase as the outside air temperature THout decreases. The accelerator operation amount upper limit is set to reduce as the vehicle speed SPD decreases, and is set to increase as the vehicle speed SPD increases.

This is because, as the outside air temperature THout decreases or as the vehicle speed SPD increases, the effect of cooling the urea aqueous solution addition valve 230 by outside air is large; whereas, as the outside air temperature THout increases or as the vehicle speed SPD decreases, the effect of cooling the urea aqueous solution addition valve 230 by outside air is small.

Subsequently, it is determined whether the accelerator operation amount detected by the accelerator sensor 22 exceeds the accelerator operation amount upper limit set in step S506 (S508). Here, when the detected accelerator operation amount is larger than the accelerator operation amount upper limit (detecdted accelerator operation amount > accelerator operation amount upper limit) (YES in S508), a value equal to the accelerator operation amount upper limit is set as the accelerator operation amount ACCP that is actually used in fuel injection amount control (S510), and then the process exits from the routine.

When the detedted accelerator operation amount is smaller than or equal to the accelerator operation amount upper limit (detected accelerator operation amount ≤ accelerator operation amount upper limit) (NO in S508), the detected accelerator operation amount is directly set to the accelerator operation amount ACCP that is actually used in fuel injection amount control (S512), and then the process exits from the routine.

After that, when urea aqueous solution is frozen (YES in S504) and when the state where the pre-SCR exhaust gas temperature TH2 is higher than or equal to the temperature correction threshold (pre-SCR exhaust gas temperature TH2 ≥ temperature correction threshold) is continuing (YES in S505), the accelerator operation amount ACCP is set in a state where the accelerator operation amount ACCP is suppressed by the accelerator operation amount upper limit.

When the urea aqueous solution freezing determination flag is set to the OFF state (NO in S504) or when the pre-SCR exhaust gas temperature TH2 is lower than the temperature correction threshold (NO in S505), the detected accelerator operation amount is directly set to the accelerator operation amount ACCP without being suppressed by the accelerator operation amount upper limit (S512). A combination of the urea aqueous solution supply mechanism 200 and the control device 80 that controls the urea aqueous solution supply mechanism 200 corresponds to a reducing agent addition system. The exhaust gas temperature suppression process (FIG 10) that is executed by the control device 80 corresponds to a process that serves as an exhaust gas temperature suppressor.

In the above-described embodiment, (1) a rise in the temperature of exhaust gas also occurs when the internal combustion engine 1 is in a high-speed high-load state. Therefore, in the exhaust gas temperature suppression process (FIG. 10), when it is not possible to add urea aqueous solution into the exhaust passage 26 due to freezing, an upper limit setting process of setting an upper limit to the accelerator operation amount ACCP that is actually used in fuel injection amount control is executed (S506 to S510). Thus, even when a driver conducts accelerator operation more than necessary, the internal combustion engine 1 does not enter an excessive high-speed high-load state. Therefore, it is possible to suppress a rise in the temperature of exhaust gas, so an overheat of the urea aqueous solution addition valve 230 due to exhaust gas is suppressed.

(2) As the outside air temperature THout rises, the urea aqueous solution addition valve 230 is more easily overheated. As the vehicle speed SPD decreases, the urea aqueous solution addition valve 230 is more easily overheated. Thus, by consulting the map MAPaccp (FIG. 11), the accelerator operation amount upper limit for suppressing the accelerator operation amount ACCP is set to reduce as the outside air temperature THout rises, and is set to increase as the outside air temperature THout decreases. The accelerator operation amount upper limit is set to reduce as the vehicle speed SPD decreases, and is set to increase as the vehicle speed SPD increases. Thus, it is possible to suppress an overheat of the urea aqueous solution addition valve 230 due to exhaust gas.

(3) The advantageous effect of (2) according to the embodiment shown in FIG. 6 is obtained.

In the embodiment shown in FIG 2, the embodiment shown in FIG. 5 or the embodiment shown in FIG. 6, when urea aqueous solution has frozen, the corrected DPF regeneration target bed temperature is calculated by correcting the pre-corrected DPF regeneration target bed temperature by the PM regeneration temperature correction amount. Instead, it is applicable that, when urea aqueous solution has frozen, an upper limit of the regeneration temperature in the PM regeneration process is set and then the corrected DPF regeneration target bed temperature is calculated by suppressing the pre-corrected DPF regeneration target bed temperature with the upper limit. In this way, when it is not possible to add urea aqueous solution into the exhaust passage 26, it is possible to suppress a rise in the temperature of exhaust gas by executing an upper limit setting process of setting an upper limit to the regeneration temperature in the PM regeneration process.

In the embodiments shown in FIG. 2, FIG. 5 or FIG. 6, when urea aqueous solution is frozen, the exhaust gas temperature at the time of PM regeneration is suppressed by reducing the fuel additive amount; instead, not the fuel additive amount is reduced but a PM regeneration prohibition process of stopping addition of fuel may be executed.

In each of the above-described embodiments, freezing of urea aqueous solution is described as the case where it is not possible to add the ammonia-based reducing agent into the exhaust passage. In this way, when the ammonia-based reducing agent is urea aqueous solution, it is not possible to add the ammonia-based reducing agent into the exhaust passage due to freezing of urea aqueous solution. In such a case, when the exhaust gas temperature suppressor functions as described above, an overheat of the addition valve is suppressed. When it is not possible to add the ammonia-based reducing agent into the exhaust passage due to some cause other than freezing of urea aqueous solution as well, each of the above-described exhaust gas temperature suppression processes may be executed. The case where it is not possible to add the ammonia-based reducing agent into the exhaust passage includes, for example, a case where there is no urea aqueous solution in the tank 210 shown in FIG. 1, a case where the supply passage 240 is clogged, a case where the pump 220 is not functioning, a case where the urea aqueous solution addition valve 230 does not open, and the like.

**Claims**

1. A control device (80) for an internal combustion engine (1) that includes a reducing agent addition system that supplies an ammonia-based reducing agent to a nitrogen oxide purification catalyst (41) arranged in downstream of an exhaust passage (26) by adding the ammonia-based reducing agent into the exhaust passage (26) of the internal combustion engine (1) through an addition valve (230), the control device (80) further comprising:

   an exhaust gas temperature suppressor that, when it is not possible to add the ammonia-based reducing agent into the exhaust passage (26), suppresses an exhaust gas temperature in the exhaust passage (26) to a lower temperature than the exhaust gas temperature when it is possible to add the ammonia-based reducing agent into the exhaust passage (26), and
   a particulate matter removal filter (32) that traps particulate matter and of which a filter function is regenerable by burning the deposited particulate matter is provided in the exhaust passage (26) at a location upstream of the addition valve (230),

   **characterized in that,**
   when it is not possible to add the ammonia-based reducing agent into the exhaust passage (26), the exhaust gas temperature suppressor executes a temperature decreasing process of decreasing the exhaust gas temperature in the exhaust passage (26) as compared to the exhaust gas temperature when it is possible to add the ammonia-based reducing agent into the exhaust passage (26),
   wherein, when it is not possible to add the ammonia-based reducing agent into the exhaust passage (26), the exhaust gas temperature suppressor executes, as the temperature decreasing process, a temperature decreasing process of decreasing a regeneration temperature of the particulate matter removal filter (32) as compared to the regeneration temperature when it is possible to add the ammonia-based reducing agent into the exhaust passage (26).

2. The control device (80) according to claim 1, **characterized in that**:

   when it is not possible to add the ammonia-based reducing agent into the exhaust passage (26), the exhaust gas temperature suppressor executes, as the temperature decreasing process, an upper limit setting process of setting an upper limit to the exhaust gas temperature.

3. The control device (80) according to claim 2, **characterized in that**:

   the exhaust gas temperature suppressor sets an upper limit to a fuel injection amount in the internal combustion engine (1) in order to set an upper limit to the exhaust gas temperature through the upper limit setting process.

4. The control device (80) according to claim 2, **characterized in that**:

   the exhaust gas temperature suppressor sets an upper limit to an accelerator operation amount that is used in fuel injection amount control over the internal combustion engine (1) in order to set an upper limit to the exhaust gas temperature through the upper limit setting process.

5. The control device (80) according to any one of claims 1-4, wherein
   the ammonia-based reducing agent is urea aqueous solution, and
   it is not possible to add the ammonia-based reducing agent into the exhaust passage (26) when the urea aqueous solution is frozen.

6. The control device (80) according to claim 1, **characterized in that**:

   the internal combustion engine (1) is mounted on a vehicle, and the exhaust gas temperature suppressor executes the temperature decreasing process by decreasing the regeneration temperature as an outside air temperature rises.

7. The control device (80) according to claim 1, **characterized in that**:

   the internal combustion engine (1) is mounted on a vehicle, and the exhaust gas temperature suppressor executes the temperature decreasing process by decreasing the regeneration temperature as a vehicle speed decreases.

8. The control device (80) according to claim 3 or 4 **characterized in that**:

the internal combustion engine (1) is mounted on a vehicle, and the exhaust gas temperature suppressor executes the upper limit setting process by decreasing the upper limit as an outside air temperature rises.

9. The control device (80) according to claim 3 or 4, **characterized in that**:

the internal combustion engine (1) is mounted on a vehicle, and the exhaust gas temperature suppressor executes the upper limit setting process by decreasing the upper limit as a vehicle speed decreases.

**Patentansprüche**

1. Steuervorrichtung (80) für eine Brennkraftmaschine (1), die aufweist:

ein Reduktionsmittel-Beimengungssystem, das ein Reduktionsmittel auf Ammoniakbasis einem Stickoxid-Reinigungskatalysator (41) zuführt, der stromabwärts in einer Abgasleitung (26) angeordnet ist, durch Beimengen des Reduktionsmittels auf Ammoniakbasis in die Abgasleitung (26) der Brennkraftmaschine (1) durch ein Beimengungsventil (230), wobei die Steuervorrichtung (80) ferner aufweist:

einen Abgastemperaturunterdrücker, der, wenn das Reduktionsmittel auf Ammoniakbasis nicht in die Abgasleitung (26) beigemengt werden kann, eine Abgastemperatur in der Abgasleitung (26) auf eine niedrigere Temperatur als die Abgastemperatur unterdrückt, wenn das Reduktionsmittel auf Ammoniakbasis in die Abgasleitung (26) beigemengt werden kann, und
einen Partikelbeseitigungsfilter (32), der in der Abgasleitung (26) an einer Stelle stromauf von dem Beifügungsventil (230) angeordnet ist und Partikeln auffängt, und von dem eine Filterfunktion regenerierbar ist durch Verbrennen der abgeschiedenen Partikel,

**dadurch gekennzeichnet, dass,**
wenn das Reduktionsmittel auf Ammoniakbasis nicht in die Abgasleitung (26) beigemengt werden kann, der Abgastemperaturunterdrücker einen Temperaturverringerungsvorgang zum Verringern der Abgastemperatur in der Abgasleitung (26) gegenüber der Abgastemperatur, wenn das Reduktionsmittel auf Ammoniakbasis in die Abgasleitung (26) beigemengt werden kann, ausführt, wobei, wenn das Reduktionsmittel auf Ammoniakbasis nicht in die Abgasleitung (26) beigemengt werden kann, der Abgastemperaturunterdrücker als den Temperaturverringerungsvorgang einen Temperaturverringerungsvorgang ausführt, bei dem eine Regenerationstemperatur des Partikelbeseitigungsfilters (32) im Vergleich zu der Regenerationstemperatur, wenn das Reduktionsmittel auf Ammoniakbasis in die Abgasleitung (26) beigemengt werden kann, verringert wird.

2. Steuervorrichtung (80) nach Anspruch 1, **dadurch gekennzeichnet, dass**:

wenn das Reduktionsmittel auf Ammoniakbasis nicht in die Abgasleitung (26) beigemengt werden kann, der Abgastemperaturunterdrücker, als den Temperaturverringerungsvorgang, einen Obergrenze-Einstellungsvorgang zum Einstellen einer Obergrenze für die Abgastemperatur ausführt.

3. Steuervorrichtung (80) nach Anspruch 2, **dadurch gekennzeichnet, dass**:

der Abgastemperaturunterdrücker eine Obergrenze für eine Brennstoffeinspritzungsmenge in der Brennkraftmaschine (1) einstellt, um eine Obergrenze für die Abgastemperatur durch den Obergrenze-Einstellungsvorgang einzustellen.

4. Steuervorrichtung (80) nach Anspruch 2, **dadurch gekennzeichnet, dass**:

der Abgastemperaturunterdrücker eine Obergrenze für einen Gaspedalverstellweg einstellt, der bei der Brennstoffeinspritzungsmengen-Steuerung der Brennkraftmaschine (1) verwendet wird, um eine Obergrenze für die Abgastemperatur durch den Obergrenze-Einstellungsvorgang einzustellen.

**5.** Steuervorrichtung (80) nach einem der Ansprüche 1 bis 4, wobei das Reduktionsmittel auf Ammoniakbasis eine wässrige Harnstofflösung ist, und das Reduktionsmittel auf Ammoniakbasis nicht in die Abgasleitung (26) beigemengt werden kann, wenn die wässrige Harnstofflösung gefroren ist.

**6.** Steuervorrichtung (80) nach Anspruch 1, **dadurch gekennzeichnet, dass**:

die Brennkraftmaschine (1) auf einem Fahrzeug montiert ist, und der Abgastemperaturunterdrücker den Temperaturverringerungsvorgang ausführt, indem er die Regenerationstemperatur verringert, wenn eine Außenlufttemperatur steigt.

**7.** Steuervorrichtung (80) nach Anspruch 1, **dadurch gekennzeichnet, dass**:

die Brennkraftmaschine (1) auf einem Fahrzeug montiert ist, und der Abgastemperaturunterdrücker den Temperaturverringerungsvorgang ausführt, indem er die Regenerationstemperatur verringert, wenn eine Fahrzeuggeschwindigkeit abnimmt.

**8.** Steuervorrichtung (80) nach Anspruch 3 oder 4, **dadurch gekennzeichnet, dass**:

die Brennkraftmaschine (1) auf einem Fahrzeug montiert ist, und der Abgastemperaturunterdrücker den Obergrenze-Einstellungsvorgang ausführt, indem er die Obergrenze verringert, wenn eine Außenlufttemperatur ansteigt.

**9.** Steuervorrichtung (80) nach Anspruch 3 oder 4, **dadurch gekennzeichnet, dass**:

die Brennkraftmaschine (1) auf einem Fahrzeug montiert ist, und der Abgastemperaturunterdrücker den Obergrenze-Einstellungsvorgang ausführt, indem er die Obergrenze verringert, wenn eine Fahrzeuggeschwindigkeit abnimmt.

**Revendications**

**1.** Dispositif de commande (80) pour un moteur à combustion interne (1) qui inclut un système d'ajout d'agent réducteur qui fournit un agent réducteur à base d'ammoniac à un catalyseur de purification d'oxydes d'azote (41) agencé en aval d'un passage d'échappement (26) en ajoutant l'agent réducteur à base d'ammoniac dans le passage d'échappement (26) du moteur à combustion interne (1) par l'intermédiaire d'une soupape d'ajout (230), le dispositif de commande (80) comprenant de plus :

un limiteur de température de gaz d'échappement qui, quand il n'est pas possible d'ajouter l'agent réducteur à base d'ammoniac dans le passage d'échappement (26), limite une température de gaz d'échappement dans le passage d'échappement (26) à une température inférieure à la température de gaz d'échappement quand il est possible d'ajouter l'agent réducteur à base d'ammoniac dans le passage d'échappement (26), et un filtre d'enlèvement de matière particulaire (32) qui piège de la matière particulaire et dont une fonction de filtre est régénérable en brûlant la matière particulaire déposée est fourni dans le passage d'échappement (26) en un emplacement en amont de la soupape d'ajout (230),

**caractérisé en ce que**,
quand il n'est pas possible d'ajouter l'agent réducteur à base d'ammoniac dans le passage d'échappement (26), le limiteur de température de gaz d'échappement exécute un processus de diminution de température diminuant la température de gaz d'échappement dans le passage d'échappement (26) en comparaison de la température de gaz d'échappement quand il est possible d'ajouter l'agent réducteur à base d'ammoniac dans le passage d'échappement (26),
dans lequel, quand il n'est pas possible d'ajouter l'agent réducteur à base d'ammoniac dans le passage d'échappement (26), le limiteur de température de gaz d'échappement exécute, comme le processus de diminution de température, un processus de diminution de température diminuant une température de régénération du filtre d'enlèvement de matière particulaire (32) en comparaison de la température de régénération quand il est possible d'ajouter l'agent réducteur à base d'ammoniac dans le passage d'échappement (26).

**2.** Dispositif de commande (80) selon la revendication 1, **caractérisé en ce que** :

quand il n'est pas possible d'ajouter l'agent réducteur à base d'ammoniac dans le passage d'échappement (26), le limiteur de température de gaz d'échappement exécute, comme le processus de diminution de température, un processus de réglage de limite supérieure réglant une limite supérieure à la température de gaz d'échappement.

3. Dispositif de commande (80) selon la revendication 2, **caractérisé en ce que** :

le limiteur de température de gaz d'échappement règle une limite supérieure à une quantité d'injection de carburant dans le moteur à combustion interne (1) afin de régler une limite supérieure à la température de gaz d'échappement par l'intermédiaire du processus de réglage de limite supérieure.

4. Dispositif de commande (80) selon la revendication 2, **caractérisé en ce que** :

le limiteur de température de gaz d'échappement règle une limite supérieure à une quantité d'actionnement d'accélérateur qui est utilisée dans la commande d'injection de carburant sur le moteur à combustion interne (1) afin de régler une limite supérieure à la température de gaz d'échappement par l'intermédiaire du processus de réglage de limite supérieure.

5. Dispositif de commande (80) selon l'une quelconque des revendications 1-4, **caractérisé en ce que** :

l'agent réducteur à base d'ammoniac est une solution aqueuse d'urée, et
il n'est pas possible d'ajouter l'agent réducteur à base d'ammoniac dans le passage d'échappement (26) quand la solution aqueuse d'urée est gelée.

6. Dispositif de commande (80) selon la revendication 1, **caractérisé en ce que** :

le moteur à combustion interne (1) est monté sur un véhicule, et le limiteur de température de gaz d'échappement exécute le processus de diminution de température en diminuant la température de régénération quand une température d'air extérieur augmente.

7. Dispositif de commande (80) selon la revendication 1, **caractérisé en ce que** :

le moteur à combustion interne (1) est monté sur un véhicule, et le limiteur de température de gaz d'échappement exécute le processus de diminution de température en diminuant la température de régénération quand une vitesse de véhicule diminue.

8. Dispositif de commande (80) selon la revendication 3 ou 4, **caractérisé en ce que** :

le moteur à combustion interne (1) est monté sur un véhicule, et le limiteur de température de gaz d'échappement exécute le processus de réglage de limite supérieure en diminuant la limite supérieure quand une température d'air extérieur augmente.

9. Dispositif de commande (80) selon la revendication 3 ou 4, **caractérisé en ce que** :

le moteur à combustion interne (1) est monté sur un véhicule, et le limiteur de température de gaz d'échappement exécute le processus de réglage de limite supérieure en diminuant la limite supérieure quand une vitesse de véhicule diminue.

# F I G . 1

# F I G . 2

EXHAUST GAS TEMPERATURE
SUPPRESSING PROCESS

LOAD OUTSIDE AIR TEMPERATURE
THout AND VEHICLE SPEED SPD — S102

S104
UREA
AQUEOUS SOLUTION
FREEZING DETERMINATION
FLAG = ON ?   NO

YES   S106

PM
REGENERATION PERMISSION
FLAG = ON ?   NO

YES

S118
PM
REGENERATION
PERMISSION
FLAG = ON ?   NO

YES

PM REGENERATION
TEMPERATURE CORRECTION
AMOUNT ← MAPurf(THout, SPD) — S108

S120
CORRECTED DPF
REGENERATION TARGET
BED TEMPERATURE ←
PRE-CORRECTED DPF
REGENERATION TARGET
BED TEMPERATURE

CORRECTED DPF REGENERATION
TARGET BED TEMPERATURE
← PRE-CORRECTED DPF
REGENERATION TARGET BED
TEMPERATURE - PM REGENERATION
TEMPERATURE CORRECTION AMOUNT — S110

S122
CORRECTED FUEL
ADDITIVE AMOUNT ←
PRE-CORRECTED FUEL
ADDITIVE AMOUNT

TEMPERATURE CORRECTING
ADDITIVE FUEL CORRECTION
AMOUNT ← MAPfuel
(PM REGENERATION TEMPERATURE
CORRECTION AMOUNT) — S112

CORRECTED FUEL ADDITIVE
AMOUNT ← PRE-CORRECTED FUEL
ADDITIVE AMOUNT - TEMPERATURE
CORRECTING ADDITIVE FUEL
CORRECTION AMOUNT — S114

FUEL ADDITION START
PERMISSION FLAG ← ON — S116

RETURN

# F I G . 3

[MAPurf]

# FIG.4

TEMPERATURE
CORRECTING
ADDITIVE FUEL
CORRECTION
AMOUNT(mm3/st)

[MAPfuel]

PM
REGENERATION
TEMPERATURE
CORRECTION
AMOUNT(°C)

0

0          100          200

# F I G . 5

```
                    ┌─────────────────────────┐
                    │  EXHAUST GAS TEMPERATURE │
                    │    SUPPRESSING PROCESS   │
                    └─────────────────────────┘
                                 │
                                 ▼              S204
                         ╱───────────────╲
                        ╱      UREA        ╲
                       ╱  AQUEOUS SOLUTION  ╲    NO
                       ╲ FREEZING DETERMINATION ╲──────────┐
                        ╲   FLAG = ON ?    ╱                │
                         ╲───────────────╱                 │
                                 │ YES                      │
                                 ▼              S206        │
                         ╱───────────────╲                 │
                        ╱       PM         ╲                │
                  NO   ╱   REGENERATION     ╲               │
              ┌───────╲    PERMISSION       ╱               │
              │        ╲   FLAG = ON ?     ╱                ▼              S218
              │         ╲───────────────╱          ╱───────────────╲
              │                 │ YES             ╱       PM         ╲
              │                 ▼       S210      ╱   REGENERATION     ╲   NO
              │        ┌──────────────────┐      ╲    PERMISSION       ╱──────┐
              │        │  CORRECTED DPF    │       ╲   FLAG = ON ?     ╱       │
              │        │ REGENERATION TARGET│       ╲───────────────╱         │
              │        │  BED TEMPERATURE  │               │ YES    S220      │
              │        │ ← PRE-CORRECTED DPF│               ▼                  │
              │        │ REGENERATION TARGET│      ┌──────────────────┐        │
              │        │ BED TEMPERATURE – PM│     │  CORRECTED DPF    │        │
              │        │REGENERATION TEMPERATURE│  │REGENERATION TARGET│        │
              │        │ CORRECTION AMOUNT │      │ BED TEMPERATURE ← │        │
              │        └──────────────────┘       │ PRE-CORRECTED DPF │        │
              │                 │       S214      │REGENERATION TARGET│        │
              │                 ▼                 │  BED TEMPERATURE  │        │
              │        ┌──────────────────┐       └──────────────────┘        │
              │        │ CORRECTED FUEL ADDITIVE│          │       S222        │
              │        │AMOUNT ← PRE-CORRECTED│            ▼                   │
              │        │ FUEL ADDITIVE AMOUNT│    ┌──────────────────┐         │
              │        │– TEMPERATURE CORRECTING│ │  CORRECTED FUEL   │         │
              │        │ADDITIVE FUEL CORRECTION│ │ ADDITIVE AMOUNT ← │         │
              │        │     AMOUNT        │      │ PRE-CORRECTED FUEL│         │
              │        └──────────────────┘       │  ADDITIVE AMOUNT  │         │
              │                 │       S216       └──────────────────┘        │
              │                 ▼                          │                   │
              │        ┌──────────────────┐                │                   │
              │        │ FUEL ADDITION START│◄──────────────┘                   │
              │        │PERMISSION FLAG ← ON│                                   │
              │        └──────────────────┘                                    │
              │                 │                                              │
              └─────────────────┴──────────────────────────────────────────────┘
                                 │
                                 ▼
                         ┌───────────────┐
                         │    RETURN     │
                         └───────────────┘
```

# F I G . 6

```
┌─────────────────────────────┐
│  EXHAUST GAS TEMPERATURE     │
│  SUPPRESSING PROCESS         │
└─────────────────────────────┘
              │
              ▼
┌─────────────────────────────┐
│  LOAD OUTSIDE AIR            │
│  TEMPERATURE THout, VEHICLE  │── S302
│  SPEED SPD AND PRE-SCR       │
│  EXHAUST GAS TEMPERATURE TH2 │
└─────────────────────────────┘
              │
              ▼
┌─────────────────────────────┐
│  TEMPERATURE CORRECTION      │── S303
│  THRESHOLD ← MAPshd(THout, SPD)│
└─────────────────────────────┘
              │
              ▼           S304
          ◇ UREA
          AQUEOUS SOLUTION
          FREEZING DETERMINATION ──── NO ──┐
          FLAG = ON ?                       │
              │ YES                         │
              ▼           S305              │
          ◇ PRE-SCR                         │
          EXHAUST GAS                       │
          TEMPERATURE TH2 ≥ ──── NO ───────▶│
          TEMPERATURE                       │
          CORRECTION                        │
          THRESHOLD ?                       ▼         S318
              │ YES                    ◇ PM
              ▼           S306         REGENERATION
     NO ── ◇ PM                        PERMISSION ──── NO ──┐
          REGENERATION                 FLAG = ON ?          │
          PERMISSION                       │ YES            │
          FLAG = ON ?                       ▼               │
              │ YES              ┌──────────────────┐       │
              ▼                  │ S120, S122 IN FIG. 2 │── S320 │
     ┌──────────────────┐        └──────────────────┘       │
     │ S108 TO S114 IN FIG. 2 │── S308    │                  │
     └──────────────────┘                 │                  │
              │◄──────────────────────────┘                  │
              ▼                                               │
     ┌──────────────────┐                                    │
     │  FUEL ADDITION START  │── S316                         │
     │  PERMISSION FLAG ← ON │                                │
     └──────────────────┘                                    │
              │◄─────────────────────────────────────────────┘
              ▼
        ┌──────────┐
        │  RETURN  │
        └──────────┘
```

# FIG.7

EP 2 685 072 B1

# F I G . 8

$$\boxed{\begin{array}{c}\text{EXHAUST GAS TEMPERATURE}\\\text{SUPPRESSING PROCESS}\end{array}}$$

LOAD OUTSIDE AIR
TEMPERATURE THout, VEHICLE
SPEED SPD AND PRE-SCR
EXHAUST GAS TEMPERATURE TH2 — S402

TEMPERATURE CORRECTION
THRESHOLD ← MAPshd(THout, SPD) — S403

S404

UREA
AQUEOUS SOLUTION
FREEZING DETERMINATION
FLAG = ON ?  →NO

↓YES

S405

PRE-SCR
EXHAUST GAS
TEMPERATURE TH2 ≥
TEMPERATURE CORRECTION
THRESHOLD ?  →NO

↓YES

FUEL INJECTION AMOUNT UPPER
LIMIT ← MAPinj(THout, SPD) — S406

S408

FUEL INJECTION
AMOUNT CALCULATED
VALUE > FUEL INJECTION
AMOUNT UPPER
LIMIT ?  →NO

↓YES   S410

FUEL INJECTION
AMOUNT ← FUEL INJECTION
AMOUNT UPPER LIMIT

S412

FUEL INJECTION
AMOUNT ← FUEL INJECTION
AMOUNT CALCULATED VALUE

$$\boxed{\text{RETURN}}$$

# F I G . 9

# FIG.10

```
┌─────────────────────────────┐
│  EXHAUST GAS TEMPERATURE     │
│    SUPPRESSING PROCESS       │
└─────────────────────────────┘
              │
              ▼
┌─────────────────────────────┐
│      LOAD OUTSIDE AIR        │
│  TEMPERATURE THout, VEHICLE  │──── S502
│   SPEED SPD AND PRE-SCR      │
│  EXHAUST GAS TEMPERATURE TH2 │
└─────────────────────────────┘
              │
              ▼
┌─────────────────────────────┐
│  TEMPERATURE CORRECTION      │──── S503
│ THRESHOLD ← MAPshd(THout, SPD)│
└─────────────────────────────┘
              │
              ▼      S504
         ╱────────────╲
        ╱    UREA       ╲
       ╱ AQUEOUS SOLUTION ╲  NO
      ╱ FREEZING DETERMINATION╲────────┐
       ╲    FLAG = ON ?     ╱          │
        ╲                 ╱            │
         ╲────────────╱               │
              │ YES                    │
              ▼       S505             │
         ╱────────────╲                │
        ╱   PRE-SCR     ╲              │
       ╱  EXHAUST GAS     ╲            │
      ╱  TEMPERATURE TH2 ≥  ╲  NO      │
     ╱ TEMPERATURE CORRECTION╲─────────┤
      ╲     THRESHOLD ?     ╱          │
       ╲                  ╱            │
        ╲────────────╱                 │
              │ YES                     │
              ▼                         │
┌─────────────────────────────┐        │
│  ACCELERATOR OPERATION       │        │
│   AMOUNT UPPER LIMIT ←       │──── S506│
│   MAPaccp(THout, SPD)        │        │
└─────────────────────────────┘        │
              │      S508               │
              ▼                         │
         ╱────────────╲                 │
        ╱  ACCELERATOR  ╲               │
       ╱OPERATION AMOUNT DETECTED╲  NO   │
      ╱ VALUE > ACCELERATOR OPERATION╲───┤
       ╲  AMOUNT UPPER LIMIT ?    ╱     │
        ╲                       ╱       │
         ╲──────────────────╱          │
              │ YES   S510              │  S512
              ▼                         ▼
┌─────────────────────────┐  ┌─────────────────────────┐
│ ACCELERATOR OPERATION   │  │ ACCELERATOR OPERATION   │
│   AMOUNT ACCP ←         │  │ AMOUNT ← ACCELERATOR    │
│ ACCELERATOR OPERATION   │  │  OPERATION AMOUNT       │
│  AMOUNT UPPER LIMIT     │  │   DETECTED VALUE        │
└─────────────────────────┘  └─────────────────────────┘
              │                         │
              └────────────┬────────────┘
                           ▼
                    ┌─────────────┐
                    │   RETURN    │
                    └─────────────┘
```

# F I G . 11

**REFERENCES CITED IN THE DESCRIPTION**

**Patent documents cited in the description**

- JP 2003176711 A
- JP 2010180801 A
- JP 2010164014 A
- JP 2008248709 A
- DE 102012105589 A1